# DEMANDE DE BREVET EUROPEEN

(11) **EP 3 623 644 A1**
(43) Date de publication de la demande: **18.03.2020**
(21) Numéro de dépôt: 19020530.2
(22) Date de dépôt: 14.09.2019
(51) Int. Cl.: F15B 15/14

(54) **PROCEDE DE FABRICATION D'UN VERIN HYDRAULIQUE ET VERIN OBTENU PAR LEDIT PROCEDE**

(30) Priorité: 14.09.2018 FR 1871047
(71) Demandeur: Rivas, Frédéric, 38210 Tullins (FR)
(72) Inventeur: Rivas, Frédéric, 38210 Tullins (FR)

(57) **Abrégé**

La présente invention concerne un procédé de fabrication d'un vérin hydraulique comprenant un corps tubulaire (10) et une tige (21) mobile en coulissement dans le corps (10), le corps (10) comprenant une première extrémité (10a) fermée de manière étanche par un fond (11) et une seconde extrémité (10b) à laquelle est agencée une douille (12), ladite douille comprenant un joint (120) d'étanchéité vis-à-vis de la tige (21), la tige (21) comprenant une première extrémité à laquelle est agencée un piston (20) et une seconde extrémité à laquelle est agencé un embout (23),
ledit procédé étant caractérisé en ce qu'il comprend un brasage par induction :
- du fond (11) et/ou de la douille (12) sur le corps (10), et/ou
- du piston (20) et/ou de l'embout (23) sur la tige (21).

L'invention concerne également un vérin obtenu par un tel procédé.

## Description

### DOMAINE DE L'INVENTION

La présente invention concerne un procédé de fabrication d'un vérin hydraulique et un vérin obtenu par ledit procédé.

### ETAT DE LA TECHNIQUE

Le corps d'un vérin est souvent constitué d'un tube sur lequel sont fixés un ou plusieurs raccords d'alimentation en huile (deux pour un vérin double effet, un seul pour un vérin simple effet). Une première extrémité du corps est fermée de manière étanche par un fond qui est également fixé sur le corps, par exemple par vissage ou soudage. A l'extrémité opposée au fond est ensuite fixée - le plus souvent par vissage - une douille qui permet un coulissement étanche de la tige de vérin dans le corps.

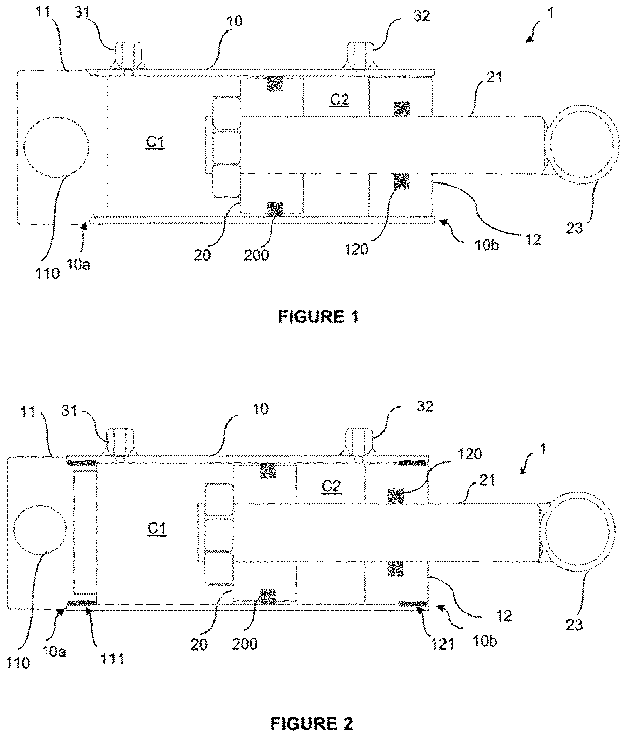

La figure 1 est une vue en coupe d'un tel vérin 1.

Le corps 10 présente une forme tubulaire avec une première extrémité 10a et une seconde extrémité 10b opposée à la première.

Un piston 20 assemblé à l'extrémité d'une tige 21 est agencé en coulissement dans le corps 10. Le piston 20 est pourvu d'au moins un joint d'étanchéité 200 qui permet de séparer le volume intérieur du corps en deux chambres C1, C2 étanches l'une vis-à-vis de l'autre. Dans le cas d'un vérin à double effet, comme sur la figure 1, chaque chambre est alimentée en huile par un conduit (non représenté) connecté au corps par un raccord hydraulique 31, 32 respectif. Dans le cas d'un vérin à simple effet (non représenté), seule l'une des chambres est alimentée en huile. L'extrémité de la tige opposée au piston est munie d'un embout 23 par lequel la tige peut être fixée à un organe à actionner par le vérin.

A l'extrémité 10a est agencé un fond 11 soudé de manière étanche sur le corps 10. Le fond comprend généralement une fixation 110 du vérin.

A l'extrémité 10b est agencée une douille 12 qui est fixée (par exemple par vissage) dans le corps 10.

La douille est pourvue d'un joint d'étanchéité 120 assurant un coulissement étanche de la tige de piston vis-à-vis de la douille.

Pour assembler le fond et les raccords hydrauliques au corps, la technique généralement utilisée est une technique de soudage. La technique de soudage habituellement utilisée est le soudage à l'arc (type MAG par exemple). Cette technique peut être mise en oeuvre manuellement par un opérateur, ou automatiquement à l'aide d'un robot afin d'assurer une plus grande répétabilité et stabilité du soudage.

Cependant, cette technique présente un certain nombre d'inconvénients.

D'une part, le temps de réglage d'une machine de soudage est long, de l'ordre d'une demi-heure, ce qui est très significatif pour une série de quelques pièces.

D'autre part, le réglage doit être fait par un soudeur de métier, ce qui ralentit le flux de fabrication car cette compétence est rare et peut ne pas être immédiatement disponible.

Par ailleurs, des dérives du process sont possibles pendant la fabrication, du fait des nombreux paramètres impliqués (forme et orientation du fil fusible assurant la conduction d'un courant électrique destiné à former l'arc, qualité du gaz, propreté et position des pièces à souder...). Un contrôle visuel doit donc être effectué immédiatement après la soudure pour vérifier l'absence d'anomalie. Un tel contrôle n'est cependant pas d'une grande fiabilité.

Enfin, l'apport de calories aux pièces soudées est important et génère des déformations du tube, ce qui oblige à réaliser ou corriger après la soudure les usinages du tube situés à proximité d'une soudure.

Pour une série de quelques pièces, l'utilisation d'un procédé de soudure pour fixer le fond sur le corps du vérin représente donc :
- une perte de temps significative due aux réglages,
- un usinage en plusieurs opérations pré et post soudure des raccords hydrauliques (perçage des alimentations hydrauliques avant soudure des raccords, puis usinage côté fond pour soudure et usinage côté douille pour vissage),
- une perturbation de l'enchaînement des opérations (plusieurs transferts des pièces entre un poste d'usinage et un poste de soudure).

Pour assembler la douille sur le corps, la technique généralement retenue est le vissage. Cependant, la réalisation d'un filetage à l'extrémité du corps implique l'utilisation d'un tour à commande numérique. Or, dans le cas d'un corps de diamètre important, la disponibilité et le coût d'un tour de dimensions adaptées sont problématiques. Par ailleurs, la réalisation d'un filet en bout de tube fragilise celui-ci et le rend incompatible avec les sollicitations mécaniques subies pendant l'utilisation du vérin.

### BREVE DESCRIPTION DE L'INVENTION

Un but de l'invention est donc de concevoir un procédé de fabrication d'un vérin hydraulique qui soit plus simple et moins coûteux, plus fiable et répétable que les procédés existants, qui évite toute déformation du corps afin de permettre la réalisation de tous les usinages en une seule opération, et qui évite le recours à un tour à commande numérique de grandes dimensions même pour des diamètres et longueurs de vérin importants.

A cet effet, l'invention propose un procédé de fabrication d'un vérin hydraulique comprenant un corps tubulaire et une tige mobile en coulissement dans le corps, le corps comprenant une première extrémité fermée de manière étanche par un fond et une seconde extrémité à laquelle est agencée une douille, ladite douille comprenant un joint d'étanchéité vis-à-vis de la tige, la tige comprenant une première extrémité à laquelle est agencée un piston et une seconde extrémité à laquelle est agencé un embout.

Ledit procédé est caractérisé en ce qu'il comprend un brasage par induction :
- du fond et/ou de la douille sur le corps, et/ou
- du piston et/ou de l'embout sur la tige.

L'avantage du brasage par induction par rapport à une soudure à l'arc est de limiter la chauffe à la profondeur souhaitée, par rapport au diamètre extérieur de l'assemblage brasé, et évite donc de chauffer l'intégralité des pièces à assembler.

Selon un mode de réalisation, le fond est brasé par induction sur le corps. Le fond peut être engagé sur l'extérieur du corps ou inséré à l'intérieur du corps.

Selon un mode de réalisation, le fond comprend en outre un raccord hydraulique.

Selon un mode de réalisation, la douille est brasée par induction sur le corps. La douille peut comprendre un connecteur intermédiaire brasé par induction sur le corps et une pièce d'étanchéité vissée sur ledit connecteur intermédiaire.

Le connecteur intermédiaire peut comprendre un raccord hydraulique.

Selon un mode de réalisation, dans lequel le piston est brasé par induction sur la tige.

Par ailleurs, l'embout peut être brasé par induction sur la tige.

Selon une forme d'exécution particulièrement avantageuse, la tige se présente sous la forme d'un tube.

Un autre objet de l'invention concerne un vérin hydraulique obtenu par le procédé décrit plus haut. Ledit vérin comprend un corps tubulaire, un fond fermant de manière étanche une première extrémité du corps, et une douille agencée à une seconde extrémité du corps, ladite douille comprenant un joint d'étanchéité vis-à-vis d'une tige mobile en coulissement dans le corps, la tige comprenant une première extrémité à laquelle est agencée un piston et une seconde extrémité à laquelle est agencé un embout. Ledit vérin est caractérisé en ce qu'il comprend une zone de brasage par induction :
- du fond et/ou de la douille sur le corps, et/ou
- du piston et/ou de l'embout sur la tige.

Selon un mode de réalisation, la douille comprend un connecteur intermédiaire brasé par induction sur le corps et une pièce d'étanchéité rapportée sur ledit connecteur intermédiaire, par exemple par vissage. Dans cet exemple cela permet de déplacer l'opération de filetage ou de taraudage sur le connecteur intermédiaire qui peut être un composant standard fabriqué en plus grande série sur des machines plus petites, et d'éviter la fragilisation du tube de vérin liée à l'opération de filetage ou de taraudage.

Selon un mode de réalisation particulièrement avantageux, la tige se présente sous la forme d'un tube et comprend une zone de brasage par induction du piston et une zone de brasage par induction de l'embout.

Selon un mode de réalisation, le vérin comprend en outre un capteur de position agencé dans la tige tubulaire, ledit capteur comprenant un élément solidaire de l'embout et un second élément agencé au travers du piston et solidaire du fond, lesdits éléments étant mobiles en coulissement l'un par rapport à l'autre.

### BREVE DESCRIPTION DES DESSINS

D'autres caractéristiques et avantages de l'invention ressortiront de la description détaillée qui va suivre, en référence aux dessins annexés sur lesquels :
- la figure 1 est une vue d'ensemble d'un vérin selon l'état de la technique ;
- la figure 2 est une vue d'ensemble d'un vérin selon un mode de réalisation de l'invention, dans lequel le fond et la douille sont assemblés sur le corps du vérin par brasage par induction ;
- la figure 3 illustre une variante du mode de réalisation de la figure 2, dans lequel le corps du vérin est logé à l'intérieur du fond ;
- la figure 4 illustre une variante du mode de réalisation de la figure 3, dans lequel le fond intègre un raccord hydraulique ;
- la figure 5 illustre une variante du mode de réalisation de la figure 2, dans lequel la douille comprend un connecteur intermédiaire brasé par induction sur le corps et une pièce d'étanchéité vissée dans ledit connecteur ;
- la figure 6 illustre une variante du mode de réalisation de la figure 5, dans lequel le connecteur intermédiaire intègre un raccord hydraulique ;
- la figure 7 illustre une variante du mode de réalisation de la figure 6, dans lequel le fond comprend une forme filetée adaptée pour recevoir une fixation ;
- la figure 8 illustre un mode de réalisation de l'invention dans lequel le piston et l'embout sont assemblés sur la tige par brasage par induction ;
- la figure 9 illustre une variante du mode de réalisation de la figure 8 dans lequel la tige est tubulaire ;
- la figure 10 illustre une variante du mode de réalisation de la figure 9 dans lequel l'embout de tige comprend une forme filetée adaptée pour recevoir une fixation.

Pour des raisons de lisibilité des figures, les différents éléments ne sont pas nécessairement représentés à l'échelle.

Les signes de référence identiques d'une figure à l'autre désignent un élément identique ou remplissant une fonction identique.

### DESCRIPTION DETAILLEE DE MODES DE REALISATION

L'invention propose un nouveau procédé de fabrication d'un vérin hydraulique, mettant en oeuvre un brasage par induction pour assembler le corps et/ou la tige du vérin. Ce brasage par induction peut être utilisé pour assembler le fond et/ou la douille sur le corps, et/ou pour assembler le piston et/ou l'embout de tige sur la tige du vérin.

Les pièces à braser sont chacune en un matériau électriquement conducteur. Ces pièces présentent une forme générale de révolution.

Avant l'assemblage du vérin, on dépose sur au moins une des pièces à assembler un métal d'apport qui présente une température de fusion inférieure à celle des pièces à assembler. Par exemple, le métal d'apport sera un alliage de cuivre et d'argent, dont les proportions pourront varier suivant les contraintes de dimensionnement de la liaison, les matériaux des pièces assemblées et les performances requises.

Pour le brasage, on utilise un inducteur dimensionné en fonction de la forme et de la taille des pièces à assembler, autour desquelles l'inducteur est mis en place au niveau de la zone à braser. L'inducteur pourra aussi être placé à l'intérieur de la pièce mâle si sa forme le permet.

L'alimentation de l'inducteur avec un courant électrique alternatif, dont la fréquence est par exemple de l'ordre de 100 à 50.000 Hz, a pour effet de générer un champ magnétique variable, qui se traduit par la génération d'un courant de Foucault alternatif dans les pièces à assembler et le métal d'apport, conduisant à leur échauffement par effet Joule. Ainsi, au bout d'une durée de chauffage suffisante, le métal d'apport fond et se diffuse par capillarité dans les pièces à assembler, formant ainsi un joint qui, après refroidissement, relie mécaniquement les pièces à assembler.

La zone d'activation des courants de Foucault est directement liée à la fréquence du courant dans l'inducteur et à la résistivité des matériaux assemblés. L'avantage du brasage par induction est donc de pouvoir limiter la chauffe à l'interface entre les deux pièces à assembler, d'éviter de chauffer l'intégralité des pièces à assembler et de limiter l'apport énergétique et le temps nécessaire pour le délivrer à leur juste nécessaire. La possibilité d'avoir un inducteur à plusieurs spires, et de forme adaptée, permet également de pouvoir chauffer de façon différente les deux pièces de l'assemblage, et de pouvoir ainsi gérer une différence de masse éventuelle entre elles, qui pourrait être préjudiciable à une bonne homogénéité des températures des deux pièces.

L'opération peut être précisément pilotée en température (régulation par sonde), elle est donc reproductible et peut être mise sous contrôle automatisé. Par exemple, il est possible de mesurer au préalable le temps de montée en température et/ou l'énergie nécessaires à l'obtention d'un brasage de bonne qualité, et de suivre ces paramètres pendant la mise en oeuvre industrielle du brasage.

De manière similaire, l'opération peut aussi être pilotée en temps, et contrôlée par mesure de température et/ou d'énergie et comparaison à des valeurs de référence.

Les paramètres de réglage (notamment la température à atteindre) dépendent des matériaux retenus (flux, métal d'apport).

Pour des vérins de diamètres ou épaisseurs différents, le seul élément physique qui doive être modifié entre deux campagnes de fabrication est l'inducteur lui-même. Les opérations à réaliser au démarrage d'une nouvelle campagne de fabrication se limitent donc à l'installation du bon inducteur (fonction du diamètre extérieur du corps du vérin) préalablement défini et mis au point. Le démarrage d'une nouvelle campagne est donc beaucoup plus rapide que pour une soudure à l'arc.

L'assemblage du vérin concerne d'une part le corps, sur lequel doivent être fixés le fond et la douille, et d'autre part la tige, sur laquelle doivent être fixés le piston et l'embout (la tige assemblée devant être mise en place dans le corps pour la fixation de la douille).

De manière préférée, le brasage par induction est utilisé pour la fixation de l'ensemble de ces pièces. On utilise ainsi une seule technique pour l'assemblage de toutes ces pièces, en bénéficiant des avantages du brasage par induction.

Cependant, l'homme du métier peut tout à fait choisir de réaliser l'assemblage d'une seule de ces pièces - ou de seulement une partie d'entre elles - par brasage par induction sur le corps, et de recourir à une autre technique d'assemblage pour la ou les autre(s) pièce(s).

La figure 2 représente un vérin 1 selon un mode de réalisation de l'invention.

Le corps 10 présente une forme tubulaire avec une première extrémité 10a et une seconde extrémité 10b opposée à la première.

Un piston 20 assemblé à l'extrémité d'une tige 21 est agencé en coulissement dans le corps 10. Le piston 20 est pourvu d'au moins un joint d'étanchéité 200 qui permet de séparer le volume intérieur du corps en deux chambres C1, C2 étanches l'une vis-à-vis de l'autre. Dans le cas d'un vérin à double effet, comme sur la figure 2, chaque chambre est alimentée en huile par un conduit (non représenté) connecté au corps par un raccord hydraulique 31, 32 respectif. Dans le cas d'un vérin à simple effet (non représenté), seule l'une des chambres est alimentée en huile.

A l'extrémité 10a est agencé un fond 11 brasé par induction de manière étanche sur le corps 10 au niveau d'une zone de brasage 111. Le fond comprend généralement une fixation 110 du vérin.

A l'extrémité 10b est agencée une douille 12 qui est brasée par induction dans le corps 10 au niveau d'une zone de brasage 121.

La douille est pourvue d'un joint d'étanchéité 120 assurant un coulissement étanche de la tige 21 de piston vis-à-vis de la douille.

Selon la forme des différentes pièces et leur agencement par rapport au corps, différentes configurations peuvent se présenter.

Dans le mode de réalisation de la figure 2, le fond 11 est conçu pour être inséré à l'intérieur du corps 10. Le fond 11 comprend alors une paroi cylindrique présentant un diamètre extérieur inférieur au diamètre intérieur du corps 10, adaptée pour être insérée à l'extrémité du corps. Un léger jeu radial est ménagé entre les deux pièces pour l'application d'un métal d'apport et l'insertion du fond 11 dans le corps 10.

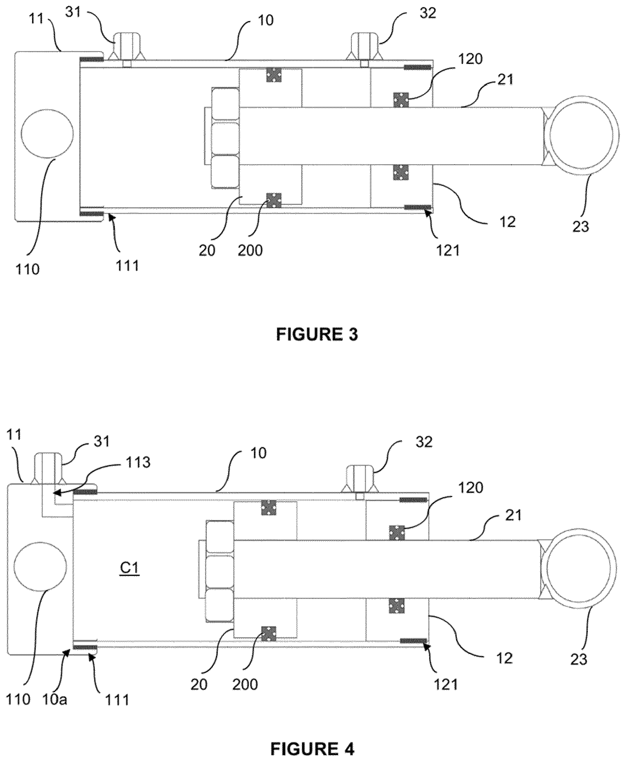

Selon un autre mode de réalisation, illustré sur la figure 3, le fond 11 est conçu pour être inséré sur l'extérieur du corps 10. Le fond comprend alors une paroi cylindrique présentant un diamètre intérieur supérieur au diamètre extérieur du corps 10, adaptée pour recevoir l'extrémité 10a du corps. Un léger jeu radial est ménagé entre les deux pièces pour l'application d'un métal d'apport et l'insertion du corps 10 dans le fond 11.

Selon un mode de réalisation, illustré sur la figure 4, le fond 11 peut comprendre un raccord hydraulique 31 s'étendant radialement vers l'extérieur à partir de la paroi circonférentielle cylindrique, le fond comprenant un orifice 113 traversant ladite paroi pour déboucher dans la chambre C1. Sur la figure 4, le raccord hydraulique 31 est représenté rapporté et fixé par soudure sur le fond, mais il peut aussi être vissé, ou intégré à la forme du fond. Bien que le fond 11 soit alors une pièce plus complexe, il permet d'assembler en une seule étape le fond et le raccord hydraulique sur le corps 10.

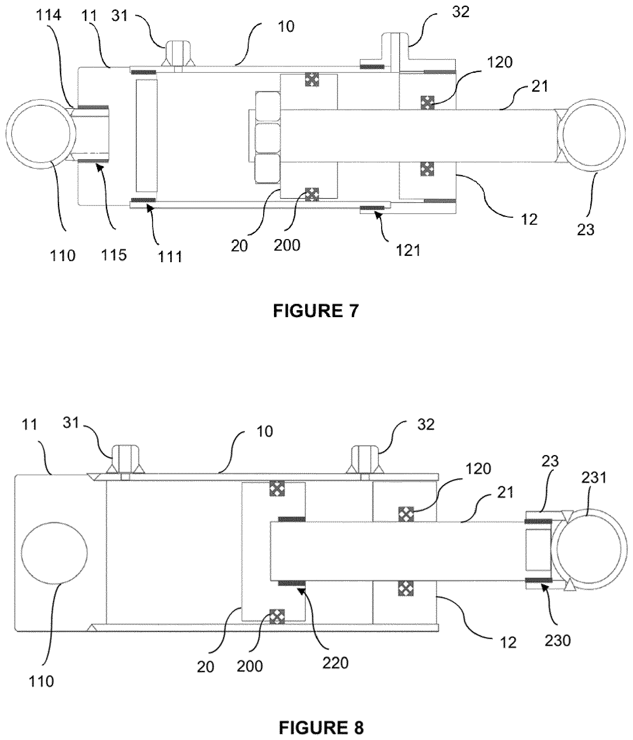

Selon un mode de réalisation, illustré sur la figure 7, le fond 11 peut comprendre un embout fileté femelle adapté pour recevoir un embout fileté mâle 114 comprenant une fixation 110 du vérin. La zone de vissage est désignée par le repère 115.

Dans le mode de réalisation illustré sur la figure 2, la douille 12 est brasée directement dans le corps 10. La douille peut être équipée du joint 120 lors du brasage, dès lors que le matériau du joint est adapté pour supporter la température atteinte lors du brasage. De manière alternative (non représentée), la douille pourrait également être brasée sur l'extérieur du corps.

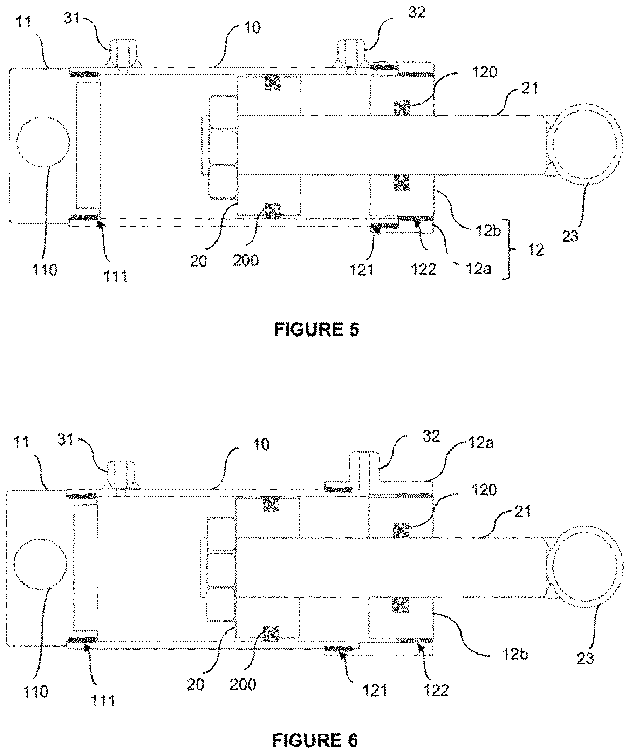

Selon un autre mode de réalisation, illustré sur la figure 5, la douille 12 comprend un connecteur intermédiaire 12a brasé par induction sur le corps 10, au niveau de la zone de brasage 121, et une pièce d'étanchéité 12b vissée dans ledit connecteur intermédiaire 12a et supportant le joint 120. La zone de vissage est désignée par le repère 122.

Un premier avantage de cette conception est qu'elle permet de s'affranchir du filetage qui est habituellement pratiqué à l'extrémité 10b du corps pour fixer la douille dans l'état de la technique. Au lieu d'un tel filetage, un usinage de l'intérieur ou de l'extérieur du corps (suivant que la douille sera montée à l'intérieur ou à l'extérieur du tube) pour former la zone de brasage est suffisant. Cet usinage ne sera pas nécessairement réalisé par tournage, ce qui pourrait nécessiter un tour de grandes dimensions, mais pourra être réalisé sur une machine de fraisage trois axes, beaucoup plus versatile et de taille indépendante de la longueur du vérin.

Par ailleurs, bien que la douille soit constituée de deux pièces au lieu d'une, elle présente l'avantage que la pièce d'étanchéité 12b peut être montée sur le connecteur intermédiaire 12a après l'étape de brasage, ce qui évite d'exposer le joint 120 à la chaleur générée par le brasage.

Selon un mode de réalisation illustré sur la figure 6, le connecteur intermédiaire 12a peut comprendre un raccord hydraulique 32 s'étendant radialement vers l'extérieur à partir de la paroi cylindrique dudit connecteur et comprenant un orifice traversant ladite paroi. Bien que le connecteur intermédiaire 12a soit alors une pièce plus complexe, il permet d'assembler en une seule étape le connecteur 12a et le raccord hydraulique 32 sur le corps 10.

D'une manière générale, la fabrication du corps comprend les étapes suivantes mises en oeuvre dans un poste d'usinage : tronçonnage du tube formant le corps à la longueur souhaitée, usinage de chaque extrémité dudit tube pour former la zone de brasage du fond et/ou de la douille, le cas échéant, perçage d'un orifice correspondant à chaque raccord hydraulique.

Puis, le corps ainsi formé est transféré dans un poste de brasage par induction pour l'assemblage du fond et/ou de la douille.

Après ces étapes de brasage par induction, le corps de vérin ne nécessite pas de retourner dans le poste d'usinage pour de nouvelles étapes de fabrication.

Un avantage de ce procédé est que l'usinage des extrémités du corps peut être effectuée par une machine dont la taille est indépendante de la longueur du vérin, et qui utilise un outil de coupe commun à plusieurs diamètres différents, ce qui permet d'éviter des changements d'outil entre deux séries de production de vérins de tailles différentes.

Par ailleurs, le brasage par induction peut également être utilisé pour la fabrication de la tige du vérin.

Selon un mode de réalisation illustré sur la figure 8, la tige peut se présenter, comme dans l'état de la technique, sous la forme d'une barre pleine, mais le piston et l'embout sont chacun brasés par induction à une extrémité respective de la tige.

L'utilisation du brasage par induction sur la tige permet de fixer directement le piston sur la tige et de supprimer le filetage nécessaire pour fixer le piston par un écrou.

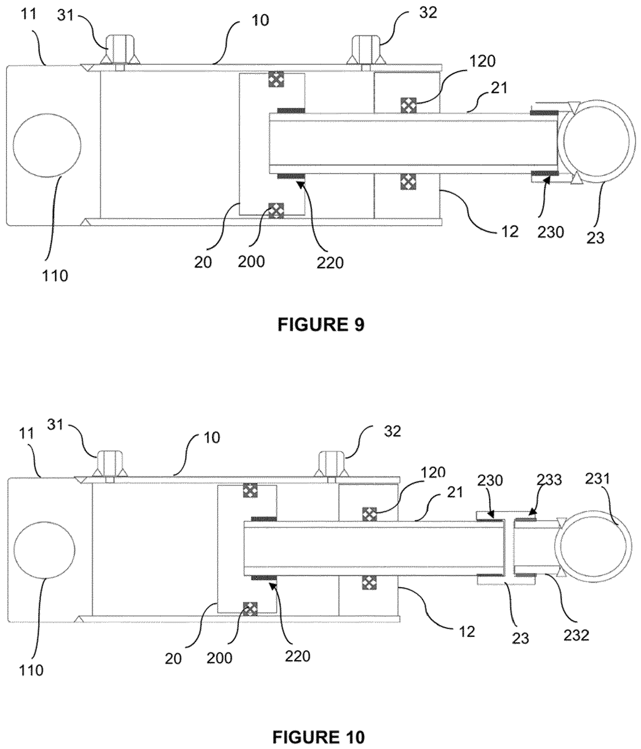

Selon un mode de réalisation illustré sur la figure 9, la tige peut se présenter sous la forme d'un tube comprenant une première extrémité orientée vers le fond 11 du vérin, et une seconde extrémité opposée à la première, s'étendant à l'extérieur du corps 10.

Le piston 20 est brasé par induction à la première extrémité de la tige 21, sur l'extérieur de celle-ci, au niveau de la zone de brasage 220.

Par ailleurs, un embout 23 est brasé par induction à la seconde extrémité de la tige, sur l'extérieur de celle-ci, au niveau de la zone 230. L'embout 23 comprend un élément de fixation 231 pour fixer la tige à un organe destiné à être déplacé par le vérin.

L'avantage d'une telle solution est un important gain de poids de la tige : 30 à 50% environ suivant le diamètre, en intégrant l'augmentation du diamètre extérieur de la tige pour obtenir un module d'inertie en flexion équivalent à celui de la tige pleine.

Un autre avantage est la simplification de l'usinage de la tige (suppression du filetage côté piston) et du piston (suppression du filetage ou suppression de l'écrou de blocage). La fabrication de la tige nécessite en effet simplement un tronçonnage du tube à la longueur souhaitée et un usinage des deux extrémités pour former les zones de brasage par induction de la coupelle et de l'embout.

Un inconvénient potentiel de ce mode de réalisation est un renchérissement de l'embout, qui doit intégrer une portion cylindrique assurant l'interface avec la tige, celle-ci pouvant être soudée à l'arc ; mais il s'agit alors d'un composant qui peut devenir standard, et produit en grandes séries, ce qui contribue à réduire son coût de revient.

Un autre avantage de la tige de vérin tubulaire et de ses extrémités rapportées par brasage est de permettre l'intégration d'un capteur de position. Un tel dispositif permet de communiquer une information sur la position du vérin à l'unité de contrôle commande gérant le système dans lequel celui-ci est intégré. Un tel capteur est constitué d'une tige coulissant dans un cylindre, l'un de ces deux éléments étant lié à la partie fixe et l'autre à la partie mobile du vérin. L'extrémité de la tige du capteur pourra par exemple être fixée à l'embout 23, une ouverture dans le piston 20 permettra au cylindre du capteur de le traverser et d'être fixé au fond 11 du vérin. Un dispositif d'étanchéité dynamique entre le guide et le piston devra être installé suivant la capacité du capteur à fonctionner dans l'huile et sous pression. La connectique du capteur sera alors assurée via la fixation du guide au fond du vérin. Ce type de capteur, quand il est installé dans un vérin à tige pleine, nécessite pour loger le capteur de percer la tige de vérin, ce qui représente un coût et un risque d'endommagement de son revêtement chromé importants. L'utilisation d'une tige tubulaire représente donc pour l'intégration d'un capteur de position un avantage significatif en coût et qualité.

Selon un autre mode de réalisation, illustré sur la figure 10, l'embout 23 n'intègre pas directement la fixation du vérin, mais une forme filetée permettant de recevoir une fixation 232 par vissage, qui peut être une pièce standard et de différents types (chape, rotule, etc.). La zone de vissage est désignée par le repère 233.

Les différents modes de réalisation décrits plus haut peuvent éventuellement être combinés lorsque cela est techniquement pertinent.

Dans le cas où le ou les raccords hydrauliques ne sont pas intégrés au fond ou à la douille, ils sont fixés sur le corps par une technique de soudure connue, après perçage d'un orifice traversant correspondant dans le corps.

## Revendications

1. Procédé de fabrication d'un vérin hydraulique comprenant un corps tubulaire (10) et une tige (21) mobile en coulissement dans le corps (10), le corps (10) comprenant une première extrémité (10a) fermée de manière étanche par un fond (11) et une seconde extrémité (10b) à laquelle est agencée une douille (12), ladite douille comprenant un joint (120) d'étanchéité vis-à-vis de la tige (21), la tige (21) comprenant une première extrémité à laquelle est agencée un piston (20) et une seconde extrémité à laquelle est agencé un embout (23),
ledit procédé étant **caractérisé en ce qu'**il comprend un brasage par induction :
- du fond (11) et/ou de la douille (12) sur le corps (10), et/ou
- du piston (20) et/ou de l'embout (23) sur la tige (21).

2. Procédé selon la revendication 1, dans lequel le fond (11) est brasé par induction sur le corps.

3. Procédé selon la revendication 2, dans lequel le fond (11) comprend un raccord hydraulique (31).

4. Procédé selon l'une des revendications 1 à 3, dans lequel la douille (12) est brasée par induction sur le corps (10).

5. Procédé selon la revendication 4, dans lequel la douille (12) comprend un connecteur intermédiaire (12a) brasé par induction sur le corps (10) et une pièce d'étanchéité (12b) vissée sur ledit connecteur intermédiaire (12a).

6. Procédé selon la revendication 5, dans lequel le connecteur intermédiaire (12a) comprend un raccord hydraulique (32).

7. Procédé selon l'une des revendications 1 à 6, dans lequel le piston (20) est brasé par induction sur la tige (21).

8. Procédé selon l'une des revendications 1 à 7, dans lequel l'embout (23) est brasé par induction sur la tige (21).

9. Procédé selon la combinaison des revendications 7 et 8, dans lequel la tige (21) se présente sous la forme d'un tube.

10. Vérin hydraulique comprenant un corps tubulaire (10), un fond (11)fermant de manière étanche une première extrémité (10a) du corps, et une douille (12) agencée à une seconde extrémité (10b) du corps, ladite douille comprenant un joint (120) d'étanchéité vis-à-vis d'une tige (21) mobile en coulissement dans le corps (10), la tige (21) comprenant une première extrémité à laquelle est agencée un piston (20) et une seconde extrémité à laquelle est agencé un embout (23),
ledit vérin étant **caractérisé en ce qu'**il comprend une zone (111, 121, 220, 230) de brasage par induction :
- du fond (11) et/ou de la douille (12) sur le corps (10), et/ou
- du piston (20) et/ou de l'embout (23) sur la tige (21).

11. Vérin selon la revendication 10, dans lequel la douille (12) comprend un connecteur intermédiaire (12a) brasé par induction sur le corps (10) et une pièce d'étanchéité (12b) vissée sur ledit connecteur intermédiaire (12a).

12. Vérin selon l'une des revendications 10 ou 11, dans lequel la tige (21) se présente sous la forme d'un tube et comprend une zone (220) de brasage par induction du piston (20) et une zone (230) de brasage par induction de l'embout (23).

13. Vérin selon la revendication 12, comprenant en outre un capteur de position agencé dans la tige (21), ledit capteur comprenant un élément solidaire de l'embout (23) et un second élément agencé au travers du piston (20) et solidaire du fond (21).
